# EUROPEAN PATENT SPECIFICATION

(11) **EP 1 099 375 B1**
(45) Date of publication and mention of the grant of the patent: **24.09.2003**
(21) Application number: 00123462.4
(22) Date of filing: 06.11.2000
(51) Int. Cl.: A01K 31/12, A01K 31/17

(54) **Cage for poultry facilities**
Geflügelkäfig
Cage à volaille

(30) Priority: 09.11.1999 IT PD990112 U
(43) Date of publication of application: 16.05.2001
(73) Proprietor: Finco, Massimo, 35100 Padova (IT)
(72) Inventor: Finco, Massimo, 35100 Padova (IT)
(74) Representative: Modiano, Guido, Dr.-Ing.

(56) References cited:
- EP-A- 0 891 704
- DE-C- 197 976
- DE-U- 29 622 177
- GB-A- 708 991
- US-A- 3 545 406
- US-A- 5 351 647

## Description

The present invention relates to a cage for poultry facilities.

Poultry facilities can assume various structural configurations.

One of the possible embodiments comprises a plurality of batteries of cages constituted by a plurality of rows of cages arranged on a plurality of tiers.

The cages have a bottom which is constituted by a metal mesh which is inclined, generally at 8°, a front wall which comprises openable sliding doors, side walls made of metal mesh, a rear wall also made of metal mesh, and finally a top wall which can be made of metal mesh or can be constituted by the return portion of a conveyor belt for removing droppings which is arranged below each row of cages, as known from US 3 545 406.

Each tier of a battery of cages comprises two rows of cages which are arranged mutually opposite along a longitudinal plane of symmetry, so that the bottoms of the rows of mutually opposite cages form, as a whole, two inclined surfaces.

Below the inclined surface there is a pipe which has a quadrangular profile, is provided with holes and is meant to dry the droppings.

Above this ventilation pipe, at the ceiling of the cages, there is a pipe for distributing water for the poultry.

These ducts are provided with nipples which are operated by the beak of the poultry.

The nipples are merely valves which allow the release of water when they are pushed, in this case by the beak of the poultry, toward the inside of the pipe.

Currently, each cage is provided with metal mesh partitions which are arranged transversely and form a plurality of living compartments.

These partitions are also designed to support the bottom of the cages, which is hung from them by means of end hooks.

The new standards that will begin to come into force from 2003 prescribe an increase in the space available to chickens inside the cages and the provision of nest-like areas in which each hen can lay eggs, areas where the hen can scratch its nails, and of perches on which the hens can roost instead of having to stay on the bottom of the cages.

The need to increase the volumes of the living compartments inside the cages entails the greatest problems.

By eliminating the metal mesh partitions, the intermediate supports for the bottom of the cage are in fact no longer available.

The bottom is supported only by the walls of the cage and therefore, since it has a large surface, it is subject to bulging.

The aim of the present invention is to provide a cage for poultry facility which increase the space available to the chickens overcoming the above problems.

Within this aim, an object of the present invention is to provide a cage for poultry facility which does not have the problem of bottom bulging.

Another object is to provide a cage for poultry facility which is obtainable by modifying the cages of conventional facilities.

Another object is to provide a cage for poultry facility which is simple to manufacture.

This aim, these objects and others which will become better apparent hereinafter are achieved by a cage for poultry facilities, characterized in that it comprises, proximate to the bottom of the cage, perches for the legs of the poultry and for supporting the bottom of the cage.

Further characteristics and advantages of the present invention will become better apparent from the following detailed description of an embodiment thereof, illustrated only by way of non-limitative example in the accompanying drawings, wherein:
- Figure 1: is a perspective view of a cage according to the invention;
- Figure 2: is a side view of the cage of Figure 1;
- Figure 3: is a view of the bottom of the cage of Figures 1 and 2;
- Figure 4: is a view of a constructive detail of Figure 3.

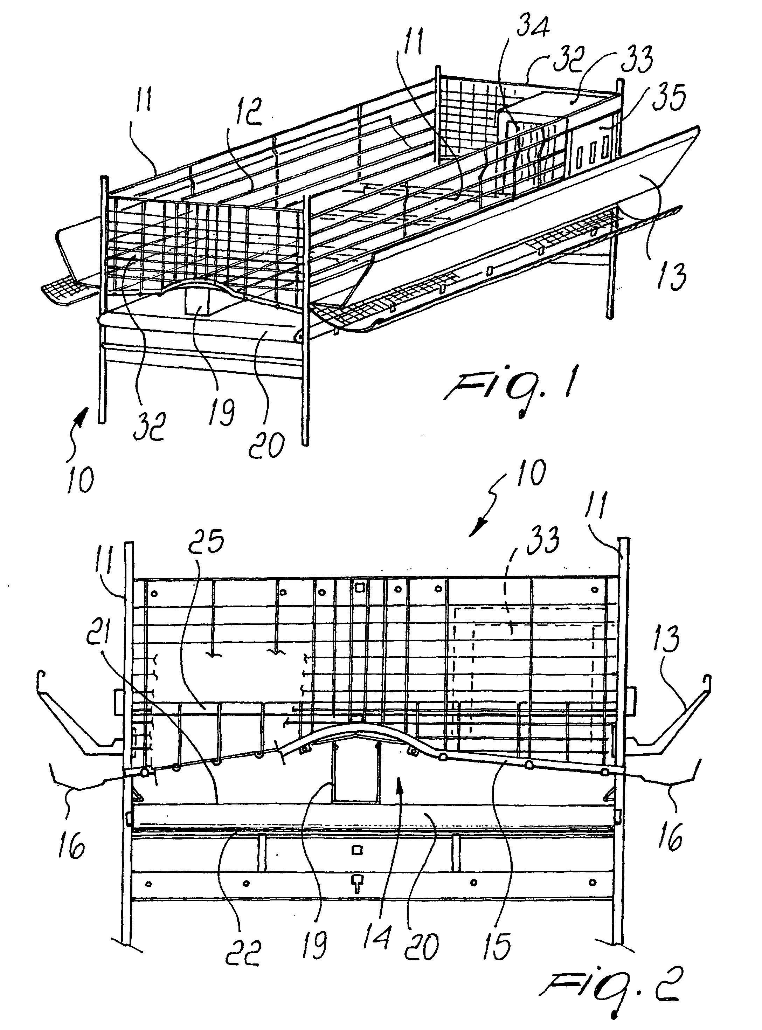

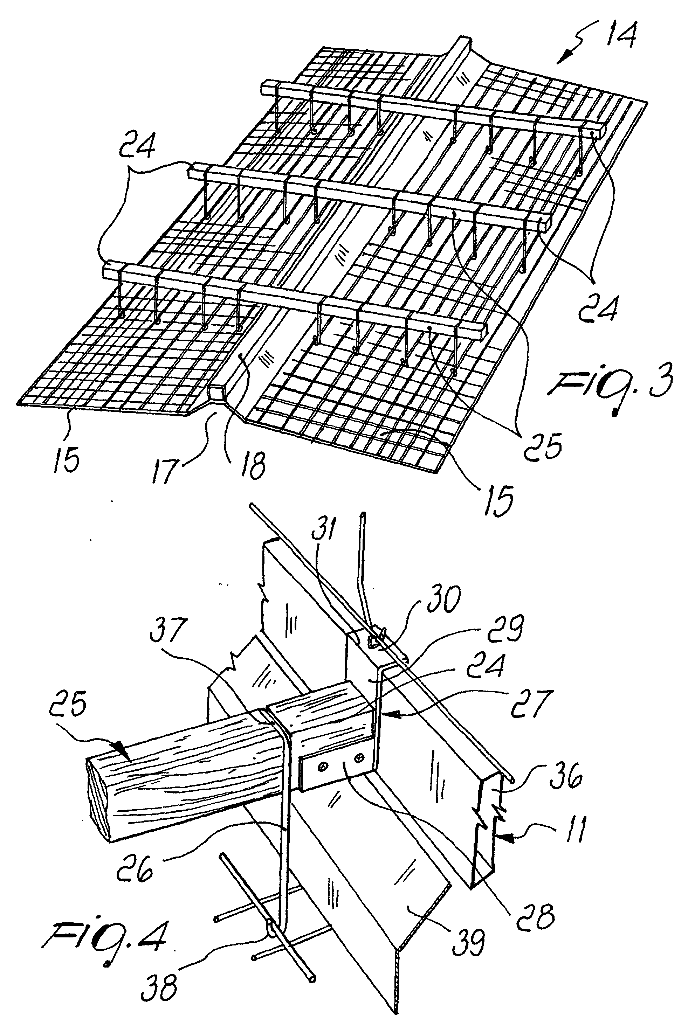

With reference to Figures 1 and 2, a cage for poultry facility according to the invention is generally designated by the reference numeral 10.

The cage 10 comprises two mutually opposite fronts 11 provided with sliding doors 12.

The fronts 11 support feeding troughs 13, constituted by folded metal plates, which are rigidly coupled and are arranged longitudinally.

The bottom 14 of the cage 10 is constituted by two inclined surfaces 15 made of metal mesh, which are generally inclined by approximately 8° and comprise an extension 16 outside the cage for collecting the eggs laid by the hens.

At the bottom of said extension 16 there is a conveyor belt, generally made of jute, not shown in the figures and in any case of a per se known type, for conveying the eggs into appropriately provided containers, also not shown in the figures.

At a ridge 17 of the inclined surfaces 15 there is a longitudinal member 18 for supporting the inclined surfaces 15; the member is constituted by a wooden bar which has a quadrangular cross-section with rounded edges and also acts as a perch, i.e., allows the poultry to roost thereon.

Below the bottom 14 of the cage 10, at the longitudinal member 18, there is a duct 19 which has a quadrangular cross-section and is provided with through holes which allow ventilation of the cages 10 and drying of the droppings.

Finally, in the region below the duct 19 there is a conveyor belt 20 for removing droppings.

The upper portion 21 of the conveyor belt 20 thus forms the lower part of the cages arranged above it, while the return portion 22 forms the ceiling of the cages 10 arranged below it.

At the ceiling of the cage 10, below a return portion 22 of the conveyor belt 20, there is a longitudinal pipe, not shown in the figures but in any case of a per se known type, which is provided with nipples.

The pipe allows the passage of water, and the nipples, when pushed by the beak of the poultry, allow the release of water and thus allow the poultry to drink.

Transverse perches 25 are arranged at the bottom 14 of the cage 10 so as to be rigidly coupled in an upward region to the longitudinal member 18 and, at their ends 24, to the fronts 11 of the cage 10.

Like the longitudinal member 18, the transverse perches 25 are constituted by rods, advantageously made of wood, which have a quadrangular cross-section with rounded edges.

The transverse perches 25 rigidly support a plurality of hooks 26 which are extended vertically in the region below said perches 25.

The hooks 26 are substantially constituted by a bent steel rod whose upper end 37 is folded vertically downward and is inserted directly in the perches 25.

The hooks 26 are meant to support the inclined surfaces 15 of the bottom 14 by means of their folded lower ends 38.

The perches 25 are rigidly coupled, at their ends 24, to brackets 27 for resting on, and fixing to, the lower parts of the corresponding fronts 11 of the cage 10, which are constituted by longitudinally arranged bars 36.

The brackets 27 are plate-like, with a first portion 28, which is shaped so as to rigidly accommodate the corresponding end 24 of said transverse perches 25 and is monolithic with respect to a second vertical portion 29, and a third portion 30, which is obtained by folding the end along a transverse line 31 of said second portion 29 and is fixed to the bars 36.

The brackets 27 are further rested on corresponding portions 39 of the feeding troughs 13 arranged below the bars 36.

A nest 33 for the poultry to lay eggs is arranged on the bottom 14 of the cage 10, at one of the two front ends 11 and at a lateral wall 32.

The nest 33 is box-shaped and is provided with an opening 34 to allow the poultry to enter the nest 33 and with an oscillating door 35 for accessing the inside of the nest 33 from the outside of the cage 10.

On the bottom of the nest 33 there is a mat of rough material, not shown in the figures, which allows the poultry to optionally scratch its nails.

In practice it has been observed that the present invention has achieved the intended aim and objects.

In particular it can be noted that by means of the hooks 26 the problem of the bulging of the bottom 14 of the cage 10 is avoided.

The present invention is susceptible of numerous modifications and variations, all of which are within the scope of the inventive concept.

The details may be replaced with other technically equivalent elements and the materials and the dimensions may be any according to requirements.

The disclosures in Italian Utility Model Application No. PD99U000112 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cage (10) for poultry facilities comprising, proximate to the bottom (14) of the cage (10), perches (25) for the legs of the poultry, **characterised in that** said perches (25) rigidly support hook-like elements (26) for supporting the bottom (14) of the cage (10).

2. The cage (10) according to claim 1, **characterised in that** it comprises two mutually opposite fronts (11) provided with doors (12) and a bottom (14) with two inclined surfaces (15).

3. The cage (10) according to claim 1, **characterised in that** said perches (25) are longitudinally elongated and have a rounded profile, a central one (18) of said perches being arranged along the longitudinal direction of the cage (10) on the ridge of said inclined surfaces (15), a plurality of said perches (25) being arranged equidistantly.

4. The cage (10) according to claim 3, **characterised in that** said longitudinally arranged perch (18) supports said inclined surfaces (15).

5. The cage (10) according to claims 1 and 3, **characterised in that** said transversely arranged perches (25) are rigidly coupled, at their ends (24), to brackets (27) for resting on, and fixing to, the corresponding walls (11) of the cage (10).

6. The cage (10) according to claim 5, **characterised in that** said brackets (27) are plate-like and have a first portion (28), which is shaped so as to accommodate the corresponding end (24) of said transverse perches (25) and is rigidly coupled to a second vertical portion (29), and a third portion (30) obtained by folding ends of said second portion (29) along a transverse line (31).

7. The cage (10) according to one or more of the preceding claims, **characterised in that** it comprises a box-shaped nest (33) which is provided with an opening (34) for the entry of the hens and with a door (35) for accessing the cage from outside, said nest (33) comprising a mat made of rough material.

## Patentansprüche

1. Käfig (10) für Geflügelhaltungen, umfassend in der Nähe des Bodens (14) des Käfigs (10) Sitzstangen (25) für die Beine des Geflügels, **dadurch gekennzeichnet, dass** die Sitzstangen (25) hakenartige Elemente (26) zum Tragen des Bodens (14) des Käfigs (10) starr tragen.

2. Käfig (10) nach Anspruch 1, **dadurch gekennzeichnet, dass** er zwei zueinander entgegengesetzte, mit Türen (12) versehene Fronten (11) und einen Boden (14) mit zwei geneigten Oberflächen (15) umfasst.

3. Käfig (10) nach Anspruch 1, **dadurch gekennzeichnet, dass** die Sitzstangen (25) in Längsrichtung langgestreckt sind und ein gerundetes Profil besitzen, wobei eine mittlere (18) der Sitzstangen entlang der Längsrichtung des Käfigs (10) auf dem Scheitel der geneigten Oberflächen (15) angeordnet ist, wobei eine Mehrzahl der Sitzstangen (25) in gleichen Abständen angeordnet ist.

4. Käfig (10) nach Anspruch 3, **dadurch gekennzeichnet, dass** die in Längsrichtung angeordnete Sitzstange (18) die geneigten Oberflächen (15) trägt.

5. Käfig (10) nach den Ansprüchen 1 und 3, **dadurch gekennzeichnet, dass** die quer angeordneten Sitzstangen (25) an ihren Enden (24) starr mit Halterungen (27) zur Auflage auf und Befestigung an den entsprechenden Wänden (11) des Käfigs (10) verbunden sind.

6. Käfig (10) nach Anspruch 5, **dadurch gekennzeichnet, dass** die Halterungen (27) plattenartig sind und einen ersten Teil (28) aufweisen, der geformt ist, so dass er das entsprechende Ende (24) der quer verlaufenden Sitzstangen (25) beherbergt und starr mit einem zweiten vertikalen Teil (29) verbunden ist, sowie einen dritten Teil (30), den man durch Umbiegen von Enden des zweiten Teils (29) entlang einer quer verlaufenden Linie (31) erhält.

7. Käfig (10) nach einem oder mehreren der vorangehenden Ansprüche, **dadurch gekennzeichnet, dass** er ein kastenförmiges Nest (33) umfasst, das mit einer Öffnung (34) für den Eintritt der Hennen und mit einer Türe (35) für einen Zugang zum Käfig von außen versehen ist, wobei das Nest (33) eine aus rauem Material hergestellte Matte umfasst.

## Revendications

1. Cage (10) pour installations avicoles comprenant, proches du fond (14) de la cage (10), des bâtons (25) pour les pattes des volailles, **caractérisée en ce que** lesdits bâtons (25) supportent de façon rigide des éléments en forme de crochet (26) pour supporter le fond (14) de la cage (10).

2. Cage (10) selon la revendication 1, **caractérisée en ce qu'**elle comprend deux faces mutuellement opposées (11) munies de portes (12) et d'un fond (14) avec deux surfaces inclinées (15).

3. Cage (10) selon la revendication 1, **caractérisée en ce que** lesdits bâtons (25) sont allongés longitudinalement et présentent une configuration arrondie, un bâton central (18) étant agencé le long de la direction longitudinale de la cage (10) sur l'arête desdites surfaces inclinées (15), une pluralités desdits bâtons (25) étant agencés de façon équidistante.

4. Cage (10) selon la revendication 3, **caractérisée en ce que** ledit bâton agencé longitudinalement (18) supporte lesdites surfaces inclinées (15).

5. Cage (10) selon les revendications 1 et 3, **caractérisée en ce que** lesdits bâtons agencés transversalement (25) sont couplés de façon rigide, à leurs extrémités (24), à des crochets (27) pour le maintien sur, et la fixation aux parois correspondantes (11) de la cage (10).

6. Cage (10) selon la revendication 5, **caractérisée en ce que** lesdits crochets (27) sont en forme de plaque et ont une première partie (28) qui est formée de façon à recevoir l'extrémité correspondante (24) desdits bâtons transversaux (25) et qui est couplée de façon rigide à une deuxième partie verticale (29), et une troisième partie (30) obtenue par pliage des extrémités de ladite deuxième partie (29) le long d'une ligne transversale (31).

7. Cage (10) selon l'une ou plusieurs des revendications précédentes, **caractérisée en ce qu'**elle comprend un nid en forme de boite (33) qui est muni d'une ouverture (34) pour l'entrée des poules et d'une porte (35) pour l'accès à la cage depuis l'extérieur, ledit nid (33) comprenant un tapis fait de matériel grossier.
